Europäisches Patentamt

European Patent Office

Office européen des brevets

(11) Numéro de publication : **0 002 167**
**B1**

# (12) FASCICULE DE BREVET EUROPÉEN

(45) Date de publication du fascicule du brevet :
17.06.81

(51) Int. Cl.³ : **B 65 H 81/08**

(21) Numéro de dépôt : **78430017.0**

(22) Date de dépôt : **19.10.78**

(54) Procédé permettant d'effectuer un revêtement complexe de protection.

(30) Priorité : **22.11.77 FR 7736199**

(43) Date de publication de la demande :
**30.05.79 (Bulletin 79/11)**

(45) Mention de la délivrance du brevet :
**17.06.81 Bulletin 81/24**

(84) Etats contractants désignés :
**BE CH DE GB LU NL SE**

(56) Documents cités :
**FR - A - 566 870**
**FR - A - 1 090 162**
**FR - A - 1 469 667**
**FR - A - 1 495 368**
**FR - A - 2 152 137**

(73) Titulaire : **Clotilde, Jacques**

**Quartier Chave F-13120 Simiane-Collongue (FR)**

**Clotilde, Michel**

**Quartier Chave F-13120 Simiane-Collongue (FR)**

(72) Inventeur : **Clotilde, Jacques**

**Quartier Chave F-13120 Simiane-Collongue (FR)**
Inventeur : **Clotilde, Michel**

**Quartier Chave F-13120 Simiane-Collongue (FR)**

(74) Mandataire : **Roman, Alphonse**
**35 Rue Paradis**
**F-13001 Marseille (FR)**

Imprimerie Jouve, 17, rue du Louvre, 75001 Paris, France

# Procédé permettant d'effectuer un revêtement complexe de protection

L'objet de l'invention concerne un procédé permettant d'effectuer un revêtement complexe de protection.

Il est destiné à la protection des tuyaux et canalisations ou autres profils par un revêtement protecteur complexe comportant des agents multiples, tels ceux à effet, soit d'écran, soit chimiques, diélectriques ou mécaniques.

Dans les protections courantes, on utilisait des appareillages et des produits obtenus par mélanges qui la plupart du temps faisaient perdre aux agents qui les composaient, une partie de leurs qualités propres. C'est ainsi qu'on utilisait le polyéthylène basse, moyenne et haute densité, qu'il était indispensable de protéger contre l'accélération du processus vieillissement dû aux rayons lumineux et plus particulièrement aux ultraviolets. C'est ainsi qu'on mélangeait le polyéthylène avec du noir de carbone qui enlève à la résine une partie de ses qualités intrinsèques, notamment son adhésivité et sa résistance.

Le procédé suivant l'invention supprime ces inconvénients et permet tout en conservant à la substance couvrante, la totalité de ses qualités d'adhésivité, et autres, d'assurer en une seule opération, le recouvrement protecteur d'un élément qui tout en mettant en contact la pièce à traiter avec un produit vierge ou non, étale une seconde couche traitée ou non.

Il concerne un procédé d'extrusion de matières qui permet à partir d'une même filière (ou tête d'extrusion) d'utiliser plusieurs matières de qualité et coloris différents, sans qu'il y ait un mélange entre elles, et en conservant à chacune des matières ses qualités propres indépendantes des autres.

Dans beaucoup de domaines techniques notamment dans celui du revêtement de tubes enterrés, on réalise selon des procédés bien connus, des épaisseurs de matière par exemple : Polyéthylène (ou tout autre matière) basse, ou moyenne ou haute densité à recouvrements successifs pour obtenir l'épaisseur adéquate.

Ces dépôts de matière peuvent être accrochés aux tubes par l'intermédiaire d'un primaire soit extrudé, soit électrostatique déposé, soit de toute autre façon.

Dans les matières employées notamment le polyéthylène, il est nécessaire de protéger le matériau lui-même contre l'accélération du processus de vieillissement dû aux ultraviolets ou autres agents.

A ce jour, lorsqu'on utilise notamment le polyéthylène, celui-ci est chargé de noir de carbone dans les pourcentages pouvant varier ; il est reconnu que cette incorporation de noir de carbone enlève au PE. une partie de ses qualités notamment : souplesse, facilités de liaison des recouvrements par thermo-collage de toutes les couches entre elles et surtout le collage sur le primaire d'adhérence.

L'objet de l'invention permet l'application de couches de revêtement complexe de protection pour tuyaux et canalisations en utilisant par l'extrusion à partir de deux ou plusieurs extrudeuses juxtaposées des granulés de natures différentes passant ensuite dans une filière unique pour former une bande à unique épaisseur et à secteurs longitudinaux parallèles, juxtaposés de différents produits servant au revêtement.

Cette opération s'effectue avec un enroulement hélicoïdal qui est conduit de façon à ce qu'une couche intérieure de même nature en une ou plusieurs épaisseurs est constituée sur le tube ainsi qu'une couche extérieure de nature différente.

On évite ainsi le mélange des produits encore semi fluides et on permet la sélection des couches.

Sur les dessins annexés donnés à titre d'exemple non limitatif d'une des formes de réalisation de l'objet de l'invention :

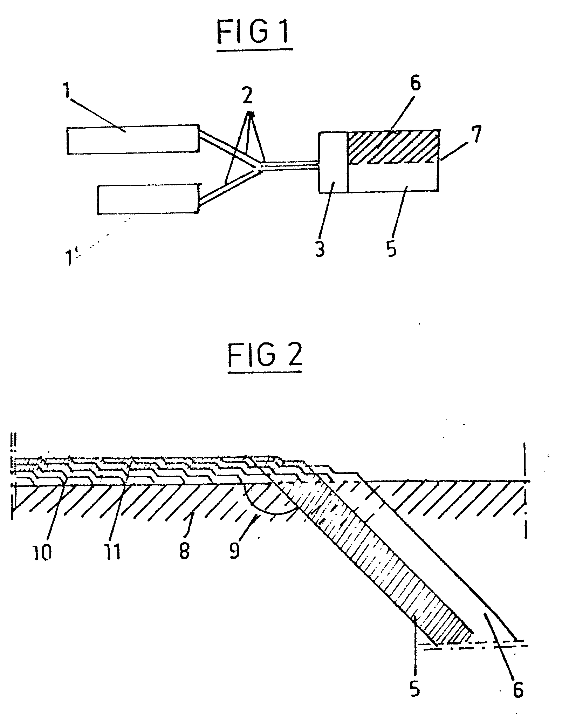

La figure 1 montre les extrudeuses multiples avec filière unique.

La figure 2 représente le résultat obtenu par l'enroulement hélicoïdal.

Le procédé utilise les extrudeuses 1, 1' débouchant par leurs conduits 2 à la filière 3 ou tête d'extrusion qui forme un complexe composé par les matières 5, 6, s'unissant par leur contact 7. Il y a donc deux bandes parallèles passant par une filière unique. Du fait de la juxtaposition on supprime tout mélange des produits encore semi fluides ou pâteux. L'enroulement s'effectue sur un tube 8 qui est animé d'un mouvement rotatif et translatif uniforme. Les bandes juxtaposées et soudées sont amenées en oblique ou hélicoïdalement 9 suivant un certain angle. On obtient alors l'enroulement 10 avec la superposition 11 et cela en autant d'épaisseur que l'on désire.

L'enroulement est hélicoïdal, c'est-à-dire qu'il s'effectue suivant un certain angle 9. Il y a ainsi un très léger décalage latéral qui permet la superposition des couches 10, 11 de nature différente. On évite donc les inconvénients des superpositions successives tout en permettant en un seul enroulement de sélectionner verticalement les couches parallèles.

C'est donc par la combinaison de ces deux moyens extrudeuses juxtaposées et enroulement hélicoïdal que se caractérise l'invention.

## Revendication

Procédé pour l'application de couches de revêtement complexe de protection pour tuyaux et canalisations, se caractérisant par l'extrusion à partir de deux ou plusieurs extrudeuses (1, 1') de bandes de natures différentes (5, 6) passant ensuite dans une filière unique (3) pour former une bande à unique épaisseur et à secteurs longitudinaux parallèles juxtaposés de différents produits servant au revêtement, cette opération étant suivie par l'enroulement hélicoïdal (9) de la dite bande sur l'élément tubulaire (8) à revêtir, l'enroulement hélicoïdal étant conduit de façon à ce qu'une couche intérieure (10) de même nature en une ou plusieurs épaisseurs soit constituée sur le tube ainsi qu'une couche extérieure (11) de nature différente.

**Claim**

A method for applying protective complex coating layers for hoses and channels, characterized by the extrusion from two or several extruding machines (1, 1') of bands of various natures (5, 6) passing thereafter into a single die (3) for forming a band having a single thickness and juxtaposed parallel longitudinal sections of various products used for the coating, said operation being followed by the helical winding of said band on the tubular element (8) to be coated, the helical winding being carried out such that a lower layer (10) of same nature, in one or several thicknesses, is formed on the tube as well as an outer layer (11) of a different nature.

**Anspruch**

Verfahren zur Aufbringung von komplexen Schutzverkleidungen für Rohre und Leitungen, gekennzeichnet durch die aus zwei oder mehreren Extrudierdüsen (1, 1') erfolgende Extrudierung von anschließend zur Ausbildung eines Bandes mit einheitlicher Stärke und mit parallelen nebeneinander liegenden Längssektoren verschiedener zur Verkleidung dienender Produkte durch eine einzige Düse (3) laufenden Bändern verschiedener Art (5, 6), wobei anschließend ein schraubenförmiges Aufrollen (9) des genannten Bandes auf dem zu verkleidenden Rohrelement erfolgt, und wobei das schraubenförmige Aufrollen in der Weise durchgeführt wird, daß eine Innenschicht (10) gleicher Art in einer oder mehreren Stärken ebenso auf dem Rohr ausgebildet wird wie eine Außenschicht (11) anderer Art.

## FIG 1

## FIG 2